# EUROPEAN PATENT APPLICATION

(11) **EP 4 520 171 A1**
(43) Date of publication of application: **12.03.2025**
(21) Application number: 23195461.1
(22) Date of filing: 05.09.2023
(51) Int. Cl.: A01N 1/02

(54) **ORGAN PERFUSION SOLUTION**

(71) Applicant: Universitätsklinikum Hamburg-Eppendorf, 20246 Hamburg (DE)
(72) Inventor: Czogalla, Jan, Hamburg (DE); Huber, Tobias B., Hamburg (DE); Puelles, Victor G., Hamburg (DE)
(74) Representative: Uexküll & Stolberg

(57) **Abstract**

The present invention relates to an organ perfusion solution, the solution comprising water, electrolytes, a colloid component, and metabolites, wherein the metabolites comprise an alkanoic acid, or salt or ester thereof. The invention is further directed to the use of the organ perfusion solution and a method of *ex vivo* organ perfusion.

## Description

The present invention relates to an organ perfusion solution for ex *vivo* organ perfusion.

Diseases can be associated with the loss of organ function, which can lead to severe physical disability and ultimately death. In many cases, there is no way to stop the progression of the loss of organ function and transplantation of donor organs is the only therapeutic option for the patients. Organ transplantation can then improve patients' quality of life and extend their life span.

Surgical transplantation procedures have been developed for a wide range of organs, including kidneys, livers, lungs, hearts, pancreas, or small intestines. However, successful transplantation requires not only the surgical procedures, but also the best possible ex *vivo* organ preservation in the ischemic phase between explantation and implantation of the donor organ. It is desirable to reduce organ damage, such as ischemic injury, during ex *vivo* organ preservation to avoid functional impairment of the organs including delayed graft function, and long-term complications. It is also desirable to provide methods which allow to extend the ex *vivo* organ preservation time to allow transporting donor organs to distant recipients, to permit in-depth functional testing, or even to provide possibilities for ex *vivo* organ therapy.

The most widely used method for ex *vivo* organ preservation, static cold storage (SCS), involves the introduction of cooled preservation solutions into the vascular bed and storage of the organs under hypothermic conditions, usually at 4°C. Hypothermia slows down cellular metabolism and organ injury. There are, however, a number of limitations associated with SCS, including tissue damage induced by prolonged hypothermic preservation and difficulty in assessing donor organ function.

In another approach, the organ is perfused with a perfusion solution under normothermic conditions (normothermic machine perfusion) in order to maintain metabolic activity and organ viability. The perfusion solution supplies oxygen and metabolites to the organ and removes damaging degradation products. With this method, damages resulting from hypothermic preservation are avoided and donor organ function may be assessed. Although successful studies have been conducted, e.g. with kidneys, normothermic perfusion methods are not yet used in clinical routine. Further improvements of the method, e.g. of the perfusion buffer, are necessary.

Several different perfusion solutions for use in machine perfusion have been described. Typically, perfusion solutions comprise electrolytes, oxygen transporters, colloids and metabolites.

EP 4 032 401 A1 describes an organ care solution for ex *vivo* machine perfusion of donor lungs, the solution comprising a metabolite, a colloid, a hormone, a steroid, a buffer, magnesium sulfate anhydrate and at least one of a phosphodiesterase inhibitor and a nitrate. The solution is intended to be mixed with blood or erythrocytes prior to perfusion of the lung.

An organ perfusion solution for use in ex *vivo* normothermic machine perfusion of lungs, the solution comprising dextran, NaCl, KCI, glucose, NaH₂PO₄, CaCl₂, MgCl₂, human serum albumin, NaHCOs and NaOH, is commercially available under the name "STEEN Solution" (XVIVO Perfusion AB, Sweden). The solution is also intended to be diluted by an erythrocyte concentrate prior to use in the perfusion method.

WO 2021/198865 discloses that by adding a glutamine compound to organ perfusion solutions, such as the STEEN Solution (XVIVO Perfusion AB, Sweden), a better quality of perfused lungs and longer perfusion times can be achieved.

It has been suggested by Hofmann et al. (Front. Physiol. (2022) 13:974615) to supplement perfusion solutions with β-nicotinamide adenine dinucleotide (NADH) to reduce endoplasmic reticulum (ER) stress. In this study, it has also been noted that perfusion with these solutions is associated with the release of cytokines and ER and metabolic stress and, therefore, further improvements in perfusion solution compositions are needed.

Hunter et al. (Transpl. Int. 2022 May 31; 35:10420) report about possibilities to assess mitochondrial function and oxygen consumption during ex *vivo* normothermic machine perfusion of kidneys to monitor organ viability. In their study, an organ perfusion solution comprising autologous red blood cells, human serum albumin, glucose, calcium gluconate, mannitol, creatinine, sodium bicarbonate, co-amoxiclav and verapamil was used.

WO 2019/040085 describes that adding the protease inhibitor alpha-1-antitrypsin to STEEN Solution (XVIVO Perfusion AB, Sweden) in ex *vivo* normothermic perfusion may improve donor organ quality and repair damaged donor organs for transplantation.

Czogalla et al. (J. Vis. Exp. 2016; 117, e54712, doi: 10.3791/54712) disclose a perfusion solution for normothermic organ perfusion of kidneys including human erythrocytes, electrolytes, albumin, and various metabolites as well as further additives including antidiuretic hormone and ampicillin.

Thus, the present invention is based on the objective of providing an organ perfusion solution which reduces organ damage in the ischemic phase and allows longer perfusion times. Reperfusion damage, which can occur when organs are reperfused with blood following the ischemic phase, should also be avoided. In addition, a delay in resuming the organ function after transplantation is to be avoided.

These objects are achieved by the organ perfusion solution according to claims 1 to 12. The invention also relates to the use of an organ perfusion solution according to claim 13 and the method of ex *vivo* organ perfusion according to claims 14 and 15.

In a first aspect, the present invention relates to an organ perfusion solution comprising water, electrolytes, a colloid component, and metabolites, characterized in that the metabolites comprise an alkanoic acid or a salt or ester thereof.

The term "electrolyte" refers to salts and ionic buffer components that can typically be found in blood or body fluids and to salts and ionic buffer components which are used to prepare buffers in a medical context. In the case that reference is made only to an anionic or cationic compound and the counterion is not specified, it is referred to the compound regardless of the type of counterion used. For example, the term "bicarbonate" relates, inter alia, to sodium bicarbonate, potassium bicarbonate, and ammonium bicarbonate.

According to the present invention, the term "metabolites" relates to compounds which may occur as intermediate or end products of mammalian metabolism. When referring to acids, the corresponding salts are also included and vice versa. In the case that reference is made only to an anionic or cationic compound, it is referred to the compound regardless of the type of counterion used. For example, the term "lactate" relates, inter alia, to sodium lactate, potassium lactate, and ammonium lactate.

The term "a colloid component" refers to at least one compound which is used to control the colloid osmotic pressure. The colloid component can be, for example, at least one polysaccharide, at least one protein, or a mixture thereof.

As used in the context of the present invention, the term "organ" is also used for parts of organs, such as parts of livers, which are to be perfused.

The organ perfusion solution of the present invention was found to result in increased cell viability during perfusion. The tissue of the perfused organ was found to be healthier, expressing lower levels of marker for ER stress, mitochondrial stress and apoptosis. Thus, it has been found that the use of the organ perfusion solution of the present invention results in lower organ damage and allows longer perfusion times, which allows improved functional analysis of the organ and may aid in organ therapy.

The organ perfusion solution of the present invention comprises metabolites comprising an alkanoic acid or salt or ester thereof. In a preferred embodiment, the alkanoic acid, or salt or ester thereof, has a concentration of 0.01 to 300 mM, preferably 0.1 to 200 mM, in particular 1 to 80 mM and particularly preferably 3 to 30 mM.

It is particularly preferred that the alkanoic acid is selected from the group consisting of propanoic acid, butanoic acid, pentanoic acid and hexanoic acid. In particular, the alkanoic acid is butanoic acid, which is preferably used as a butyrate, e.g. as sodium butyrate.

In addition to the alkanoic acid, or salt or ester thereof, the organ perfusion solution may comprise further metabolites.

In a preferred embodiment, the further metabolites comprise at least one compound of the citric acid cycle. The term "compound of the citric acid cycle" refers to all reactants, reaction products and cofactors of the reactions of the citric acid cycle. It is further preferred that the further metabolites comprise at least two, in particular at least three, more preferably at least four and particularly preferably at least five compounds of the citric acid cycle. Preferably, the at least one compound of the citric acid cycle is selected from the group consisting of oxaloacetate, acetylcoenzyme A, citrate, cis-aconitate, isocitrate, oxalosuccinate, α-ketoglutarate, succinyl-coenzyme A, succinate, fumarate, malate, oxaloacetate, nicotinamide adenine dinucleotide, guanosine diphosphate, guanosine triphosphate, ubiquinol, ubiquinone and mixtures thereof.

The term "nicotinamide adenine dinucleotide" (NAD) refers to the oxidized form NAD⁺ as well as to the reduced form NADH. Particularly preferably, the NAD is present as NADH in organ perfusion solutions of the present invention.

It is also preferred that the further metabolites comprise at least one and preferably all of urea, lactate, pyruvate, malate, α-ketoglutarate, and nicotinamide adenine dinucleotide.

In a particularly preferred embodiment, the metabolites comprise, in addition to the alkanoic acid or salt or ester thereof, nicotinamide adenine dinucleotide. In this embodiment, it is further preferred that the metabolites further comprise at least one of urea, lactate, pyruvate, malate, α-ketoglutarate.

It has been found that the combination of nicotinamide adenine dinucleotide with an alkanoic acid or salt or ester thereof, such as sodium butyrate, is particularly advantageous to avoid organ damage and allow long organ perfusion times.

In another preferred embodiment, the metabolites comprise at least one and preferably all of the following compounds in the concentrations specified:

| Compound | Concentration (mM) | | |
|---|---|---|---|
| Butyrate | 0.01-300, | preferably 1-80, | in particular 3-30 |
| Glucose | 0.1-20, | preferably 3-15, | in particular 6-9.5 |
| Urea | 0.1-15, | preferably 1-12, | in particular 4-8 |
| Lactate | 0.1-10, | preferably 0.2-7, | in particular 0.8-4 |
| Pyruvate | 0.01-3, | preferably 0.05-1, | in particular 0.1-0.6 |
| Malate | 0.05-6, | preferably 0.1-4, | in particular 0.5-2 |
| α-Ketoglutarate | 0.05-6, | preferably 0.1-4, | in particular 0.5-2 |
| NAD | 0.001-1, | preferably 0.006-0.5, | in particular 0.01-0.2 |

In another preferred embodiment, the metabolites further comprise a composition of amino acids and/or a composition of vitamins, wherein the composition of amino acids and the composition of vitamins may comprise one or more types of amino acids and vitamins, respectively.

The organ perfusion solution of the present invention also comprises electrolytes.

In a preferred embodiment, the electrolytes comprise at least one and preferably all of NaCl, KCI, bicarbonate, monobasic phosphate, dibasic phosphate, CaCl₂, MgSO₄, and MgCl₂.

It is preferred that the bicarbonate is sodium bicarbonate or potassium bicarbonate, in particular sodium bicarbonate.

In another preferred embodiment, monobasic phosphate is monobasic sodium phosphate or monobasic potassium phosphate. It is also preferred that dibasic phosphate is dibasic sodium phosphate or dibasic potassium phosphate. In a particularly preferred embodiment, monobasic phosphate is monobasic potassium phosphate and dibasic phosphate is dibasic sodium phosphate.

It is further preferred that the electrolytes comprise at least one and preferably all of the following compounds in the concentrations specified:

| Compound | Concentration (mM) | | |
|---|---|---|---|
| NaCl | 10-250, | preferably 80-160, | in particular 105-135 |
| KCI | 0.5-20, | preferably 1-10, | in particular 3-7 |
| CaCl₂ | 0.1-10, | preferably 0.2-7, | in particular 0.8-4 |
| MgSO₄ | 0.01-3, | preferably 0.01-1, | in particular 0.1-0.5 |
| MgCl₂ | 0.05-6, | preferably 0.1-4, | in particular 0.5-2 |
| Bicarbonate | 0.5-150, | preferably 3-90, | in particular 20-40 |
| Monobasic phosphate | 0.01-3, | preferably 0.05-1, | in particular 0.1-0.6 |
| Dibasic phosphate | 0.05-6, | preferably 0.1-4, | in particular 0.5-2 |

The organ perfusion solution of the present invention preferably comprises a specific combination of electrolytes and metabolites.

It is preferred that electrolytes comprise NaCl, KCI, bicarbonate, monobasic phosphate and dibasic phosphate, and the metabolites comprise glucose. It is further preferred that the electrolytes comprise, in addition, at least one and preferably all of CaCl₂, MgSO₄, and MgCl₂.

In a particularly preferred embodiment, the metabolites and the electrolytes comprise all of the following compounds in the concentrations specified:

| Compound | Concentration (mM) | | |
|---|---|---|---|
| Butyrate | 0.01-300, | preferably 1-80, | in particular 3-30 |
| Glucose | 0.1-20, | preferably 3-15, | in particular 6-9.5 |
| Urea | 0.1-15, | preferably 1-12, | in particular 4-8 |
| Lactate | 0.1-10, | preferably 0.2-7, | in particular 0.8-4 |
| Pyruvate | 0.01-3, | preferably 0.05-1, | in particular 0.1-0.6 |
| Malate | 0.05-6, | preferably 0.1-4, | in particular 0.5-2 |
| α-Ketoglutarate | 0.05-6, | preferably 0.1-4, | in particular 0.5-2 |
| NAD | 0.001-1, | preferably 0.006-0.5, | in particular 0.01-0.2 |
| NaCl | 10-250, | preferably 80-160, | in particular 105-135 |
| KCI | 0.5-20, | preferably 1-10, | in particular 3-7 |
| CaCl₂ | 0.1-10, | preferably 0.2-7, | in particular 0.8-4 |
| MgSO₄ | 0.01-3, | preferably 0.01-1, | in particular 0.1-0.5 |
| MgCl₂ | 0.05-6, | preferably 0.1-4, | in particular 0.5-2 |
| Bicarbonate | 0.5-150, | preferably 3-90, | in particular 20-40 |
| Monobasic phosphate | 0.01-3, | preferably 0.05-1, | in particular 0.1-0.6 |
| Dibasic phosphate | 0.05-6, | preferably 0.1-4, | in particular 0.5-2 |

The organ perfusion solution further comprises a colloid component.

Preferably, the colloid component is selected from the group consisting of albumin, dextran, and mixtures thereof. It is further preferred that the colloid component comprises albumin, preferably in a concentration of from 0.5 to 10 wt.-%, in particular 3 to 5 wt.-%, and particularly preferably 3.8 to 4.5 wt.-%, based on the total weight of the organ perfusion solution.

It is further preferred that the albumin is human serum albumin.

For example, in a particularly preferred embodiment, the colloid component comprises 0.5 to 10 wt.-%; in particular 3 to 5 wt.-%, particularly preferably 3.8 to 4.5 wt.-% albumin, based on the total weight of the organ perfusion solution, and the electrolytes and the metabolites comprise all of the following compounds in the concentrations specified:

| Compound | Concentration (mM) | | |
|---|---|---|---|
| Butyrate | 0.01-300, | preferably 1-80, | in particular 3-30 |
| Glucose | 0.1-20, | preferably 3-15, | in particular 6-9.5 |
| Urea | 0.1-15, | preferably 1-12, | in particular 4-8 |
| Lactate | 0.1-10, | preferably 0.2-7, | in particular 0.8-4 |
| Pyruvate | 0.01-3, | preferably 0.05-1, | in particular 0.1-0.6 |
| Malate | 0.05-6, | preferably 0.1-4, | in particular 0.5-2 |
| α-Ketoglutarate | 0.05-6, | preferably 0.1-4, | in particular 0.5-2 |
| NAD | 0.001-1, | preferably 0.006-0.5, | in particular 0.01-0.2 |
| NaCl | 10-250, | preferably 80-160, | in particular 105-135 |
| KCI | 0.5-20, | preferably 1-10, | in particular 3-7 |
| CaCl₂ | 0.1-10, | preferably 0.2-7, | in particular 0.8-4 |
| MgSO₄ | 0.01-3, | preferably 0.01-1, | in particular 0.1-0.5 |
| MgCl₂ | 0.05-6, | preferably 0.1-4, | in particular 0.5-2 |
| Bicarbonate | 0.5-150, | preferably 3-90, | in particular 20-40 |
| Monobasic phosphate | 0.01-3, | preferably 0.05-1, | in particular 0.1-0.6 |
| Dibasic phosphate | 0.05-6, | preferably 0.1-4, | in particular 0.5-2 |

The organ perfusion solution may be cell-free or comprise cells.

In a preferred embodiment, the organ perfusion solution is cell-free. Cell-free perfusion solutions usually have a higher controllability and reproducibility in the preparation of the solutions than solutions comprising cells. By using a cell-free perfusion solution, several risks and side effects can be avoided. For example, cell contamination such as leukocytes or inflammatory factors from blood products can trigger proinflammatory reactions during reperfusion that may negatively affect graft quality and function. The organ perfusion solution of the present invention, even if cell-free, was found to have the advantageous effects in terms of low organ damage and long perfusion times when used in a perfusion method. With the perfusion solutions of the present invention, machine perfusion can be performed without causing a lack of oxygen supply in the organ.

In another preferred embodiment, the organ perfusion solution further comprises cells. It is particularly preferred that the organ perfusion solution comprises red blood cells, and/or stem cells. It can be possible to further improve the properties of the organ perfusion solution of the present invention, e.g. to further reduce organ damage, by adding cells.

It is further preferred that the organ perfusion solution comprises one or more additives selected from the group consisting of antibiotics, diuretics, vasodilators, anti-clotting agents, oxygen carriers, pharmaceutically active compounds, and anti-inflammatory agents. The specific compounds which are suitable for use as an additive in each case will be known to the person skilled in the art.

In a second aspect, the invention relates to the use of the organ perfusion solution according to the first aspect of the invention in an organ perfusion method, wherein the organ is preferably a kidney, a liver, a lung, a heart, a pancreas, a small intestine, in particular a kidney or a liver and particularly preferably a kidney.

It is preferred that the organ perfusion method is a normothermic perfusion method. The normothermic perfusion method is in particular performed at 35 to 38°C and particularly preferably at 36 to 37°C.

In a third aspect, the invention is directed to a method of ex *vivo* organ perfusion, the method comprising perfusing an organ ex *vivo* with the organ perfusion solution according to the first method of the invention. In a preferred embodiment, the method is a normothermic machine perfusion method.

In a preferred embodiment, the organ is a kidney, a liver, a lung, a heart, a pancreas, a small intestine, in particular a kidney or a liver and particularly preferably a kidney.

In another preferred embodiment, the method comprises oxygenating the organ perfusion solution prior to perfusing the organ ex *vivo* with the organ perfusion solution.

It is further preferred that perfusing the organ ex *vivo* is performed at a temperature in the range of 20 to 38°C, preferably 30 to 37°C and particularly preferably 36 to 37°C.

The invention disclosed herein is exemplified by the following examples which should not be construed to limit the scope of the disclosure.

### Examples

### Examples 1 and 1A: Preparation of organ perfusion solutions

An organ perfusion solution of the present invention (Example 1) and an industry standard (Example 1A, Comparative) were prepared by providing aqueous solutions with the compositions specified in Table 1 and adding bovine serum album in each case to a final concentration of 4.5 wt.-%, based on the total weight of the solution.

**Table 1**

| | ***Example 1*** | ***Example 1A (Comparative)*** |
|---|---|---|
| **Compound** | **Concentration [mM]** | **Concentration [mM]** |
| NaCl | 119 | 119 |
| KCI | 4.9 | 4.9 |
| CaCl₂ | 2.03 | 2.03 |
| MgSO₄ | 0.28 | 0.28 |
| MgCl₂ | 1.03 | 1.03 |
| NaHCO₃ | 27 | 27 |
| KH₂PO₄ | 0.22 | 0.22 |
| Na₂HPO₄ | 0.84 | 0.84 |
| Glucose | 5.55 | 5.55 |
| Sodium butyrate | 10 | - |
| Sodium lactate | 2.1 | - |
| Sodium pyruvate | 0.3 | - |
| α-Ketoglutarate | 1 | - |
| Malic Acid | 1 | - |
| NADH | 0.07 | - |
| Urea | 6 | - |

### Example 2: Use of organ perfusion solutions for perfusing kidneys

The organ perfusion solutions of Examples 1 and 1A were used under identical conditions for normothermic machine perfusion of mouse kidneys.

Normothermic machine perfusion was performed for 1 h at 37°C at 100 mmHg using a Hugo Sachs Instruments perfusion apparatus.

After perfusion, the condition of the kidneys was tested via various assays.

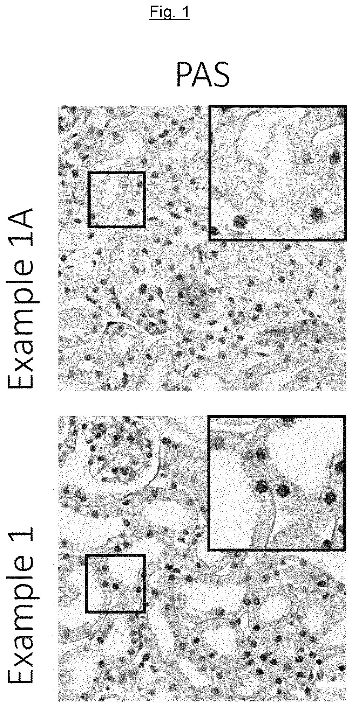

Periodic acid-Schiff (PAS) staining revealed that the tissue integrity of the kidneys that were perfused with the organ perfusion solution of Example 1 is improved (see Fig. 1, top panel) compared to kidneys that were perfused with the comparative solution of Example 1A (see Fig. 1, bottom panel).

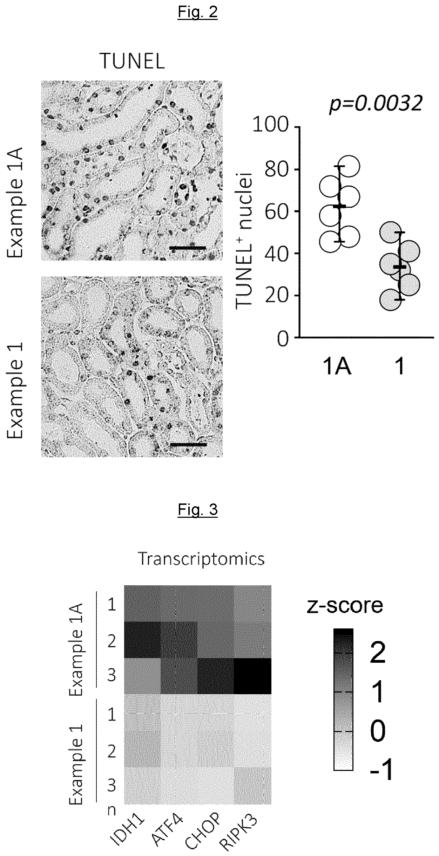

A TUNEL (terminal deoxynucleotide transferase dUTP nick end labeling) assay was carried out in order to examine the degree to which apoptosis was induced by using organ perfusion solutions of Examples 1 and 1A. The Deadend Colorimetric TUNEL System (G7130, Promega) was used according to the manufacturer's specifications on paraffin embedded tissue samples. The incubation time of proteinase K was 20 min, the staining time of DAB 12 min. TUNEL-positive nuclei were counted in a blinded manner. For each condition, 15-20 microscopic images per sample were evaluated. It was found that perfusion of kidneys with the organ perfusion solution of Example 1 induces less apoptosis than perfusion of kidneys with the comparative solution of Example 1A (p=0.0032, see Fig. 2).

RT-qPCR analysis revealed that the use of the organ perfusion solution of Example 1 leads to a reduced gene expression of markers of mitochondrial stress (IDH1), ER stress (ATF4), apoptosis (CHOP) and necroptotic cell-death (RIPK3), compared to the use of the organ perfusion solution of Example 1A (see Fig. 3). Fig. 3 shows that all samples of kidneys which were perfused with the organ perfusion solution of Example 1A exhibit a z-score that is clearly positive for all four marker genes tested. Compared to these samples, the z-score of the samples of kidneys which were perfused with the organ perfusion solution of the present invention is clearly lower for all four marker genes tested (p<0.001 for all conditions).

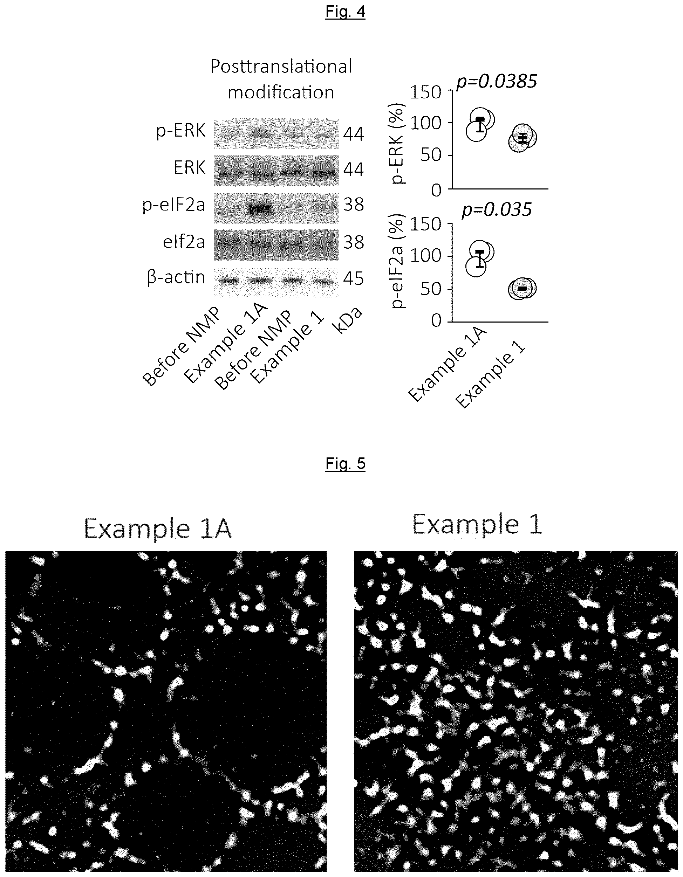

Western blot analysis also demonstrated that the use of the organ perfusion solution of Example 1 results in less mitochondrial stress and less ER stress. As can be seen from Fig. 4, the use of the organ perfusion solution of Example 1A results in a higher abundance of phosphorylated markers for mitochondrial stress (p-ERK) and ER stress (p-eIF2a) than the use of the organ perfusion solution of Example 1.

Furthermore, improved tissue integrity was observed after perfusion with the solution of Example 1 as compared to after perfusion with the solution of Example 1A in ExSRRF (expansion-enhanced super-resolution radial fluctuations) microscopy using a calreticulin (CaIR) staining as a marker of the ER lumen (see Fig. 5).

### Example 3. Transplantation of kidneys into rats

The organ perfusion solutions of Example 1 and Example 1A were used to perfuse rat kidneys as described for the mouse kidneys in Example 2.

Then, kidneys were transplanted into rats and the survival of the acceptor animals was monitored. Acceptor rats that received kidney transplants which had been perfused with the organ perfusion solution of the present invention (Example 1) were found to have a prolonged survival compared to the acceptor rats that received kidney transplants which had been perfused with the comparative organ perfusion solution (Example 1A). Animals with kidneys perfused with the comparative solution (Example 1A) died within one to two days from kidney failure, while animals with kidneys perfused with the solution of the invention (Example 1) survived for 14 days (n = 5-6, p<0.001).

### Example 4: Use of organ perfusion solutions for perfusing livers

The organ perfusions solutions of Examples 1 and 1A were used for perfusing pig livers under normothermic conditions.

Perfusion was performed for 2 h at 37°C using a Hugo Sachs Instruments perfusion apparatus.

After perfusion, the condition of the livers was tested.

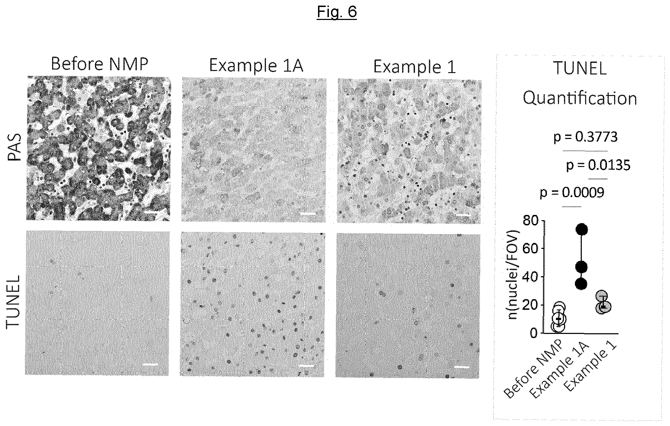

The degree to which apoptosis was induced was determined using the TUNEL method as described for Example 2. TUNEL quantification revealed 11 nuclei of apoptotic cells per field of view (nuclei/FOV) before normothermic machine perfusion and 21 nuclei/FOV after perfusion using the solution of Example 1. After normothermic machine perfusion using the comparative organ perfusion solution of Example 1A, 52 nuclei/FOV were determined (see Fig. 6). Hence, it was found that the use of the organ perfusion of the present invention resulted in a significantly lower induction of apoptosis compared to the comparative organ perfusion solution of Example 1A (p=0.0135).

## Claims

1. Organ perfusion solution comprising
water,
electrolytes,
a colloid component, and
metabolites,
**characterized in that** the metabolites comprise an alkanoic acid, or salt or ester thereof.

2. Organ perfusion solution according to claim 1, in which the alkanoic acid, or salt or ester thereof, has a concentration of 0.01 to 300 mM, preferably 0.1 to 200 mM, in particular 1 to 80 mM and particularly preferably 3 to 30 mM.

3. Organ perfusion solution according to claim 1 or 2, in which the alkanoic acid is selected from the group consisting of propanoic acid, butanoic acid, pentanoic acid, and hexanoic acid, and particularly preferably is butanoic acid.

4. Organ perfusion solution according to any one of claims 1 to 3, in which the metabolites comprise the alkanoic acid, or salt or ester thereof, and at least one, preferably at least two, in particular at least three, more preferably at least four and particularly preferably at least five compounds of the citric acid cycle.

5. Organ perfusion solution according to any one of claims 1 to 4, in which the metabolites comprise the alkanoic acid, or salt or ester thereof, and at least one and preferably all of urea, lactate, pyruvate, malate, α-ketoglutarate and nicotinamide adenine dinucleotid.

6. Organ perfusion solution according to any one of claims 1 to 5, in which the metabolites comprise at least one and preferably all of the following compounds in the indicated concentrations:
| Compound | Concentration (mM) | | |
|---|---|---|---|
| Butyrate | 0.01-300, | preferably 1-80, | in particular 3-30 |
| Glucose | 0.1-20, | preferably 3-15, | in particular 6-9.5 |
| Urea | 0.1-15, | preferably 1-12, | in particular 4-8 |
| Lactate | 0.1-10, | preferably 0.2-7, | in particular 0.8-4 |
| Pyruvate | 0.01-3, | preferably 0.05-1, | in particular 0.1-0.6 |
| Malate | 0.05-6, | preferably 0.1-4, | in particular 0.5-2 |
| α-Ketoglutarate | 0.05-6, | preferably 0.1-4, | in particular 0.5-2 |
| NAD | 0.001-1, | preferably 0.006-0.5, | in particular 0.01-0.2 |

7. Organ perfusion solution according to any one of claims 1 to 6, in which the electrolytes comprise at least one and preferably all of NaCl, KCI, bicarbonate, monobasic phosphate, dibasic phosphate, CaCl₂, MgSO₄, and MgCl₂.

8. Organ perfusion solution according to any one of claims 1 to 7, in which the electrolytes comprise at least one and preferably all of the following compounds in the indicated concentrations:
| Compound | Concentration (mM) | | |
|---|---|---|---|
| NaCl | 10-250, | preferably 80-160, | in particular 105-135 |
| KCI | 0.5-20, | preferably 1-10, | in particular 3-7 |
| CaCl₂ | 0.1-10, | preferably 0.2-7, | in particular 0.8-4 |
| MgSO₄ | 0.01-3, | preferably 0.01-1, | in particular 0.1-0.5 |
| MgCl₂ | 0.05-6, | preferably 0.1-4, | in particular 0.5-2 |
| Bicarbonate | 0.5-150, | preferably 3-90, | in particular 20-40 |
| Monobasic phosphate | 0.01-3, | preferably 0.05-1, | in particular 0.1-0.6 |
| Dibasic phosphate | 0.05-6, | preferably 0.1-4, | in particular 0.5-2 |

9. Organ perfusion solution according to claim 7 or 8, in which the electrolytes comprise NaCl, KCI, bicarbonate, monobasic phosphate and dibasic phosphate, and the metabolites comprise glucose and preferably the electrolytes further comprise at least one and preferably all of CaCl₂, MgSO₄, and MgCl₂.

10. Organ perfusion solution according to any one of claims 1 to 9, in which the colloid component comprises albumin, preferably in a concentration of from 0.5 to 10 wt.-%, in particular 3 to 5 wt.-% and particularly preferably 3.8 to 4.5 wt.-%, based on the total weight of the organ perfusion solution.

11. Organ perfusion solution according to any one of claims 1 to 10, which is cell-free or comprises cells.

12. Organ perfusion solution according to any one of claims 1 to 11, further comprising one or more additives selected from the group consisting of diuretic, antibiotics, vasodilator, multivitamins, anti-clotting agent, oxygen carrier, amino acids and anti-inflammatory agent.

13. Use of the organ perfusion solution according to any one of claims 1 to 12 in organ perfusion, wherein the organ is preferably a kidney, a liver, a lung, a heart, a pancreas or a small intestine, in particular a kidney or a liver and particularly preferably a kidney.

14. Method of ex *vivo* organ perfusion, comprising perfusing an organ ex *vivo* with the organ perfusion solution of any one of claims 1 to 13.

15. Method according to claim 14, wherein the organ is a kidney, a liver, a lung, a heart, a pancreas or a small bowel, preferably a kidney or a liver and particularly preferably a kidney.
